# EUROPEAN PATENT APPLICATION

(11) **EP 3 945 165 A1**
(43) Date of publication of application: **02.02.2022**
(21) Application number: 21185875.8
(22) Date of filing: 15.07.2021
(51) Int. Cl.: E02F 3/43, A01B 63/32, B62D 49/02, E02F 9/20, E02F 9/22, F15B 1/02, F15B 11/08, F15B 13/02

(54) **METHOD AND SYSTEM FOR ACTUATING AN ARM OF A WORK VEHICLE**

(30) Priority: 31.07.2020 IT 202000018778
(71) Applicant: CNH Industrial Italia S.p.A., 10135 Torino (IT)
(72) Inventor: Garramone, Adriano, 73100 Lecce (IT); Gravili, Andrea, 73100 Lecce (IT); Liberti, Stefano, 73100 Lecce (IT); Venezia, Antonio, 10153 Torino (IT)
(74) Representative: CNH Industrial IP Department

(57) **Abstract**

Method for actuating an arm (B) of a work vehicle hinged in a first end to a frame (F) of the work vehicle so that a second end, opposite to the first, is arranged to rise or lower with respect to a surface supporting the vehicle, the arm being operated by means of a double-chamber hydraulic actuator (A1, ARM) which can be connected to a hydraulic pump (P) and/or to a recovery tank (T) of hydraulic liquid, wherein a first chamber (Lift up) of the actuator is arranged to expand causing the arm to rise and a second chamber (Lift down), opposite to the first one, is arranged to expand causing the arm to lower, the method providing for allowing the expansion of the second chamber by feeding the second chamber with a first flow of hydraulic liquid, pumped by the hydraulic pump (P), and at the same time with a second flow of hydraulic liquid sucked by the recovery tank (T) of hydraulic liquid to exploit the weight force acting on the arm, the weight force causing the second chamber to expand.

## Description

### Field of the invention

The present invention relates the field of the hydraulic circuits for actuating mechanical arms of work vehicles.

### State of the art

In the context of work and agricultural vehicles, the operation of users, such as arms and related tools, is carried out by means of a hydraulic circuit.

The hydraulic circuit is supplied by a hydraulic pump driven in rotation by a prime mover, often an internal combustion engine.

The hydraulic actuators implemented for the movement of the organs are of the double chamber type, that is to say a mobile piston divides two closed chambers alternately supplied by the hydraulic pump.

When a first chamber is operatively connected to the pump, the second chamber, opposite the first one, is connected with a collection tank in which excess hydraulic fluid is collected. The discharge of the hydraulic liquid into the collection tank is not a problem, but rather the filling of the chamber connected to the hydraulic pump, which has a flow rate strictly proportional to the number of revolutions of the prime mover. To increase the flow of hydraulic fluid generated by the hydraulic pump, the operator often accelerates the prime mover, i.e. brings it to a higher rotation speed. This operation is performed when the operator wishes to speed up the movement of a hydraulically controlled organ.

Therefore, when the operator wants to quickly raise or lower the arm of the work machine, he/she accelerates the prime mover with a clear increase of fuel consumption. The increase of fuel consumption partly compensates for the increase in productivity of the work or agricultural vehicle. Nevertheless, it is believed that current practice can be corrected and improved to keep productivity unchanged with significant fuel savings.

If not specifically excluded in the detailed description that follows, what is described in this chapter is to be considered as an integral part of the detailed description.

### Summary of the invention

The object of the present invention is to present a method and system for controlling an arm of a work vehicle, in particular a mechanical shovel.

The basic idea of the present invention is to exploit the force of gravity during the lowering of the arm. To facilitate the filling of the expansion chamber of the cylinder actuator, a check valve is provided to suck up hydraulic fluid from the collection tank. Therefore, the flow of hydraulic liquid sucked from the collection tank supplements the flow of hydraulic liquid that crosses the control valve of the arm actuator cylinder, making the arm lowering extremely fast. Advantageously, the presence of the check valve designed to allow the expansion chamber of the actuator to suck hydraulic fluid from the collection tank does not alter any of the behaviour of the arm in other operating conditions. Preferably, when the arm control lever is operated so as to lower the arm, the rotation speed of the prime mover is automatically limited to a predetermined rotation speed. Therefore, on the one hand, a rapid lowering of the arm is guaranteed and on the other, fuel consumption is limited.

It has been found that the speed of descent of the arm is equal to or greater than the speed achievable with a prior art scheme in which the rotation speed of the prime mover is increased. Therefore, the performances are at least unchanged and the fuel consumption reduced.

The dependent claims describe preferred variants of the invention, forming an integral part of this description.

### Brief description of the figures

Further objects and advantages of the present invention will become clear from the following detailed description of an embodiment thereof (and of its variants) and from the annexed drawings given purely for explanatory and non-limiting purposes, wherein:
Figure 1 shows a work vehicle comprising an arm and a relative shovel;
Figure 2 shows an example of a simplified electro-hydraulic circuit object of the present invention;
Figure 3 shows an example of a complete electro-hydraulic circuit;

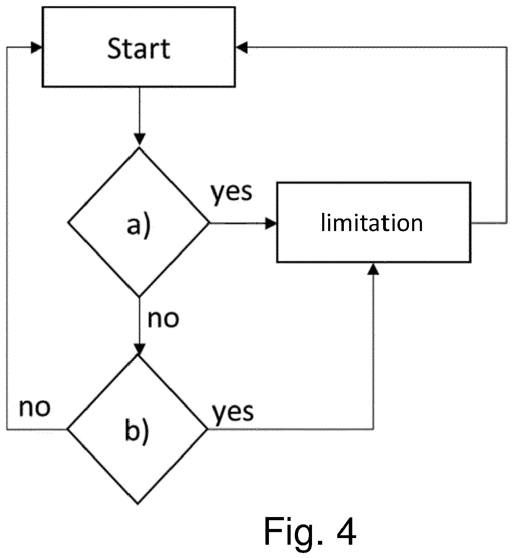

Figure 4 shows a flow chart relating to a check carried out on the prime mover.

The same numbers and the same reference letters in the figures identify the same elements or components or functions.

In the context of this description, the term "second" component does not imply the presence of a "first" component. These terms are in fact used as labels to improve clarity and should not be understood in a restrictive way.

The elements and characteristics illustrated in the various preferred embodiments, including the drawings, can be combined with each other without however departing from the scope of the present application as described below.

### Detailed description of exemplary embodiments

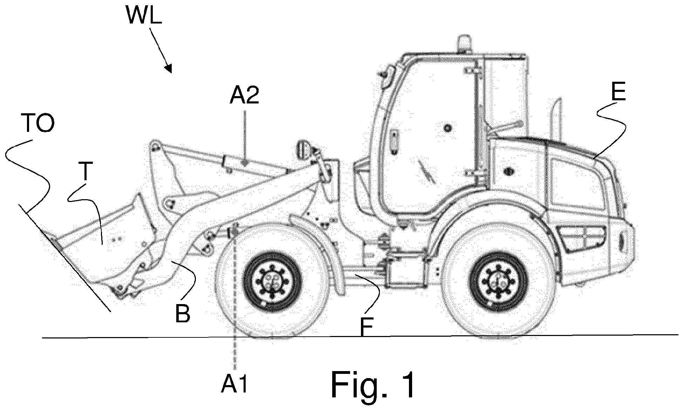

According to the present invention, a work vehicle WL such as a mechanical shovel or loader, see figure 1, preferably wheeled (wheel loader) comprises a frame F, a prime mover E which rotates a hydraulic pump (not shown) which allows to pressurize a hydraulic circuit which allows to control one or more hydraulic actuators A1, A2 for the movement respectively of an arm B, having a first end hinged to the frame and a second end to support a tool T, and the tool T such as a shovel or forks etc ..

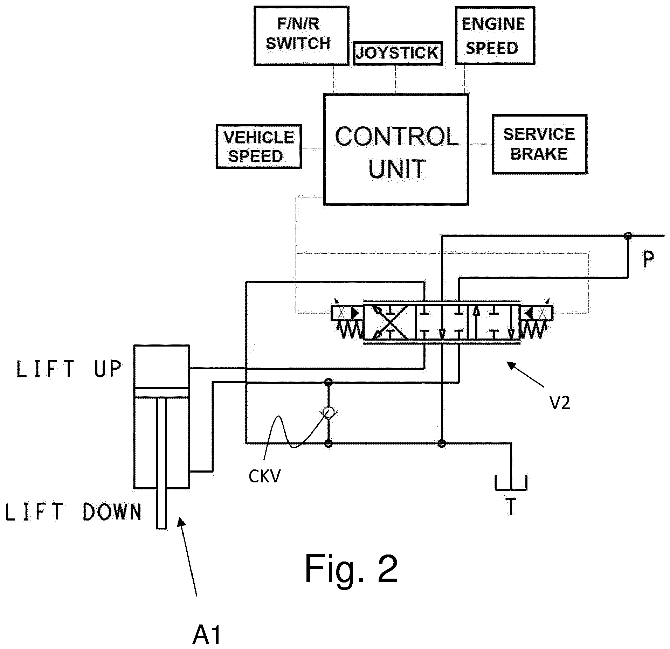

Figure 2 shows an example of a simplified electro-hydraulic control scheme of arm B.

The A1 hydraulic actuator, also referred to as hydraulic cylinder, includes two opposing chambers marked with the labels "Lift up" and "Lift down".

When the arm is raised, the "Lift up" chamber is operationally powered by the hydraulic pump schematized with the "P" symbol, while the "Lift down" chamber is connected to the hydraulic liquid collection tank T to discharge the excess liquid due to contraction of the same Lift down chamber.

Compared to a known scheme, the scheme of figure 2 comprises a non-return valve CKV, which connects the hydraulic liquid collection tank T with the supply duct of the Lift down chamber. The CKV valve is arranged so that an expansion of the lift down chamber turns the CKV valve into opening condition allowing the same lift down chamber to expand by sucking hydraulic fluid from the hydraulic fluid collection tank T. In these conditions, therefore, the supply duct of the Lift down chamber is simultaneously fed by the hydraulic pump P and the collection tank T.

The A1 actuator is controlled by a V2 control valve. This is preferably of the three-position type with a rest position which directly connects the supply conduit connected with the hydraulic pump to the collection tank T. Therefore, the pumped liquid is sent directly to the collection tank.

In a first lateral position, for example on the left, the hydraulic pump feeds the Lift up chamber which brings the arm B up, while the Lift down chamber is connected to the collection tank T. In the second lateral position, for example on the right, the hydraulic pump feeds the lift down chamber which brings the arm down.

When the control valve V2 is in the central or rest position, the Lift up chamber is completely closed therefore it opposes any further movement of the arm.

When the control valve V2 is in the second lateral position, since the Lift up chamber is connected to the collection tank by means of the control valve V2, while the Lift down chamber is connected to the collection tank by means of the non-return valve CKV, therefore while the Lift down chamber expands by filling with hydraulic liquid coming from both the hydraulic pump and the collection tank, the Lift up chamber is free to contract by discharging liquid into the collection tank.

In other words, the two Lift Up and Lift Down chambers are short-circuited via the collection tank, while only the Lift down chamber receives the contribution of the hydraulic pump. The weight of the same arm determines the rapid lowering of the same.

Preferably, when the joystick that controls the elevation of the arm is in a position to determine its lowering, the processing unit "Control Unit" limits the rotation speed of the prime mover E.

According to a preferred variant of the invention, this limitation can be enabled or disabled by means of a bistable button (not shown) located in the instrument panel of the vehicle or by setting it in a specific menu of a man/machine interface.

According to a preferred variant of the invention, the processing unit monitors further parameters including the condition of the service brake, the vehicle speed and the transmission if it is engaged in forward gear. "F - Switch "Or reverse" R - Switch "or if it is in neutral" N-Switch "and the position of the joystick that controls the actuation of arm B.

In particular, the processing unit verifies that
a) The transmission is switched off "N-Switch",
b) Or the transmission is inserted forwards or backwards, and at the same time
   o The service brake is released,
   o the vehicle speed is lower than a predetermined threshold and
   o the angle of deviation of the lever that controls the forward/backward movement of the vehicle is below a predetermined threshold,
if at least one of the conditions a) or b) is verified then, the rotation speed of the prime mover is limited as described above, otherwise, the rotation speed of the prime mover undergoes no limitation.

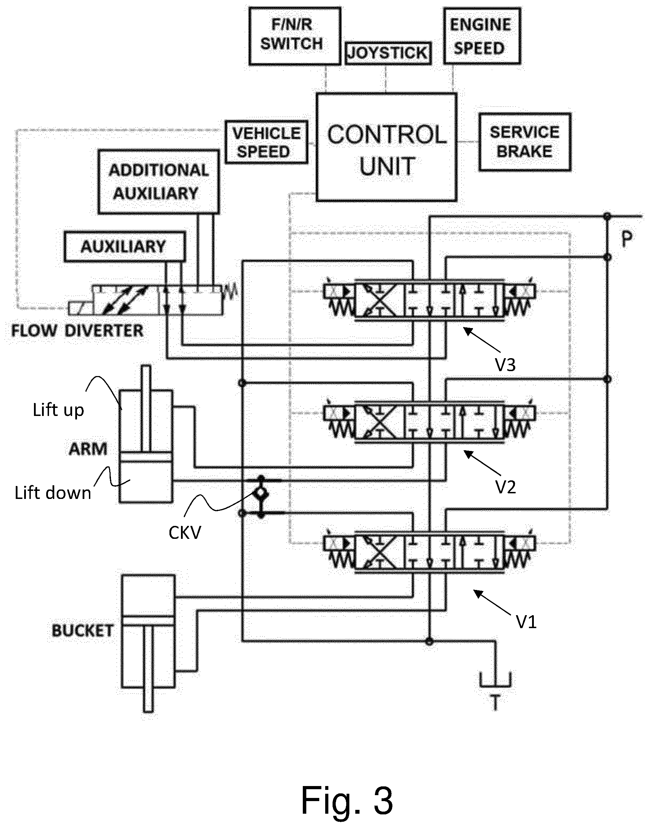

The circuit of figure 3 shows a more complete electro-hydraulic scheme than that of figure 2.

This, moreover, includes the control valve V1 which controls the actuator A2, here referred to as "Bucket" as it controls the inclination of the tool, irrespective it is a shovel or a fork etc .. the actuator A1, here indicated as "arm", there is also a third control valve V3 which controls a possible auxiliary "Auxiliary" and optionally an additional auxiliary "Additional auxiliary" by means of a switching valve indicated with "Flow" diverter".

The present invention can be advantageously carried out by means of a computer program, which comprises coding means for the realization of one or more steps of the method, when this program is executed on a computer. Therefore, it is understood that the scope of protection extends to said computer program and further to computer readable means which comprise a recorded message, said computer readable means comprising program coding means for carrying out one or more method steps, when this program is run on a computer.

Implementing variations to the non-limiting example described are possible, without, however, departing from the scope of protection of the present invention, including all equivalent realizations for a person skilled in the art, to the content of the claims.

From the above description, the person skilled in the art is able to realize the object of the invention without introducing further construction details.

## Claims

1. Method for actuating an arm (B) of a work vehicle hinged in a first end to a frame (F) of the work vehicle so that a second end, opposite to the first, is arranged to rise or lower with respect to a surface supporting the vehicle, the arm being operated by means of a double-chamber hydraulic actuator (A1, ARM) which can be connected to a hydraulic pump (P) and/or to a recovery tank (T) of hydraulic liquid, wherein a first chamber (Lift up) of the actuator is arranged to expand causing the arm to rise and a second chamber (Lift down), opposite to the first one, is arranged to expand causing the arm to lower, the method providing for allowing the expansion of the second chamber by feeding the second chamber with a first flow of hydraulic liquid, pumped by the hydraulic pump (P), and at the same time with a second flow of hydraulic liquid sucked by the recovery tank (T) of hydraulic liquid to exploit the weight force acting on the arm, the weight force causing the second chamber to expand.

2. The method of claim 1 further comprising a step of limiting a rotation speed of the hydraulic pump during a boom lowering procedure.

3. Method according to claim 2, wherein the hydraulic pump is driven in rotation by a prime mover (E) and wherein the rotation speed of the hydraulic pump is limited by limiting a rotation speed of the prime mover (E).

4. Method according to claim 3, further comprising a step preliminary to limiting the rotation speed of the prime mover comprising the positive verification of one of the following conditions:
a) The transmission is switched off "N-Switch", or
b) the transmission is inserted forward or backward, and contextually
o The service brake is released,
o the vehicle speed is lower than a predetermined threshold and
o the angle of deviation of the lever that controls the forward / backward movement of the vehicle is below a predetermined threshold,
and only if one of the conditions a) or b) is verified then, the rotation speed of the prime mover is limited.

5. A computer program comprising program coding means adapted to carry out all steps of any one of claims 2 to 4, when said program is run on a computer.

6. Computer readable means comprising a recorded program, said computer readable means comprising program coding means adapted to perform all steps of any one of claims 2 to 4, when said program is run on a computer.

7. Hydraulic circuit for driving at least one arm (B) of a work vehicle, arranged to control the raising and lowering of the arm (B) with respect to a support surface of the work vehicle, the hydraulic circuit comprising a pump hydraulic (P) arranged to feed the hydraulic circuit and a double chamber hydraulic actuator (A1, ARM) connectable with the hydraulic pump (P) and/or with a recovery tank (T) of hydraulic liquid, in which a first chamber (Lift up) of the actuator is arranged to expand causing the arm to rise and a second chamber (Lift down), opposite to the first one, is arranged to expand causing the arm to lower, the circuit comprising a check valve (CKV) which connects the second chamber with the recovery tank (T) so that during the lowering of the arm a first flow of hydraulic liquid is supplied by the hydraulic pump and a second flow of hydraulic liquid is sucked d the hydraulic liquid recovery tank (T) due to the weight force acting on the arm, the weight force causing the second chamber to expand.

8. Circuit according to claim 7, further comprising a control valve (V2) arranged to control the supply of the hydraulic actuator (A1, arm) comprising a central or rest position, in which the first chamber (Lift up) is completely closed, a second lateral position, in which the first chamber (Lift up) is connected with the collection tank by means of the control valve (V2), while the second chamber (Lift down) is connected with the hydraulic pump by means of the control valve (V2) and with the hydraulic fluid collection tank (T) by means of the check valve (CKV).

9. System for actuating an arm (B) of a work vehicle hinged in a first end to a frame (F) of the work vehicle so that a second end, opposite to the first, is arranged to rise or fall with respect to a support surface of the vehicle, the system comprising the hydraulic circuit according to one of claims 7 or 8 and processing means (Control unit) configured to limit (limit) a rotation speed of the hydraulic pump during a lowering procedure of the arm.

10. System according to claim 9, wherein the hydraulic pump is driven in rotation by a prime mover (E) and in which the limitation of the rotation speed of the hydraulic pump is achieved by limiting a rotation speed of the prime mover (E).

11. System according to claim 10, wherein the processing means are further configured to positively verify one of the following conditions:
a) The transmission is switched off "N-Switch", or
b) the transmission is inserted forward or backward, and contextually
o The service brake is released,
o the vehicle speed is lower than a predetermined threshold e
o the angle of deviation of the lever that controls the forward / backward movement of the vehicle is below a predetermined threshold,
and wherein only if one of the conditions a) or b) is verified then, the processing means are configured to limit the rotation speed of the prime mover.

12. Work or agricultural vehicle equipped with an arm (B) hinged at one end to a chassis (F) of the work vehicle so that a second end, opposite to the first, can rise or fall with respect to a support surface of the vehicle, the arm being operated by an actuation system according to any one of claims 9 - 11.
